# EUROPEAN PATENT APPLICATION

(11) **EP 3 023 655 A1**
(43) Date of publication of application: **25.05.2016**
(21) Application number: 14194432.2
(22) Date of filing: 24.11.2014
(51) Int. Cl.: F16C 32/04

(54) **Active magnetic bearing arrangement and method**

(71) Applicant: ABB Technology AG, 8050 Zürich (CH)
(72) Inventor: Holopainen, Timo, 00380 Helsinki (FI)
(74) Representative: Kolster Oy Ab

(57) **Abstract**

The arrangement comprises at least one radial magnetic bearing for supporting a shaft on a support structure and a control unit (200) for controlling the radial magnetic bearing. The magnetic bearing (100) comprises a rotor portion (110) attached to the shaft (10) and a stator portion (120) attached to the support structure. The stator portion (120) comprises electromagnets (121) arranged in diagonally opposing pairs around the shaft (10). The arrangement comprises further two radial position sensors (131, 132) positioned at an axial (X1-X1) distance (B3) form each other in connection with the stator portion (120) and a pre-processing unit (210). A deformation line (L2) of the centre axis of the loaded shaft (10) and a deformation line (L3) of the centre axis of the stator portion (120) is determined in the pre-processing unit (210) based on the deviations (D1, D2) measured by the radial position sensors (131, 132) in order to determine an estimated deviation of the shaft (10) at a position situated either between the radial position sensors (131, 132) or beyond either of the radial position sensors (131, 132) in the axial (X1-X1) direction and using the estimate of the deviation of the shaft (10) at said position in the control unit (200) for controlling the stator portion (120).

## Description

### FIELD OF THE INVENTION

The present invention relates to an active magnetic bearing arrangement according to the preamble of claim 1.

The present invention also relates to a method for controlling an active magnetic bearing according to the preamble of claim 7.

### BACKGROUND ART

Active magnetic bearings have been used in small rotating machines for a long time, but they are also used in large electric machines having a high rotation speed i.e. a power of over 1 MW and a rotation speed of over 5 000 rpm. Such electric motors are used e.g. in pumping natural gas from submarine gas fields. The higher rotation speed makes it possible to connect the drive device e.g. a multistep radial compressor directly to the shaft of the electric motor. A separate gear between the electric motor and the compressor is thus not needed. The electric motor and the drive device can be fitted into a common cylindrical pressure frame. The common pressure frame makes it possible to achieve a very high class of protection and water tightness also for the electric motor. This means that the pump unit, comprising the electric motor and the drive device, which are integrated into a single pump unit, can be positioned on the sea bottom above the gas field.

An active magnetic bearing comprises radial magnetic bearings for rotatably supporting the shaft of the electric machine in a desired radial position and an axial magnetic bearing for keeping the shaft of the electric machine in a desired axial position.

A typical radial magnetic bearing comprises an actuator, a radial position sensor and a safety bearing. The actuator, the radial position sensor and the safety bearing can be integrated into one package or they can be separate entities.

A radial magnetic bearing comprises a stator portion and a rotor portion. The rotor portion is a sleeve fitted on the outer periphery of the shaft of the electric machine and secured against rotation and axial movement. The stator portion i.e. the actuator is composed of electromagnets fitted in diagonally opposing pairs around the shaft of the electric machine and firmly attached to the frame of the electric machine. The electromagnets are controlled by a control system by varying the current in the electromagnets in response to the signals of the radial position sensor.

The axial magnetic bearing comprises a bearing collar in the form of a flat solid ferromagnetic disc which is secured to the shaft of the electric machine. Disc-shaped electromagnets are situated on either side of the collar and secured to the frame of the electric machine. The electromagnets keep the shaft in a desired axial position.

The radial position sensor is normally located close to the respective actuator of the magnetic bearing and outwardly from the actuator in an axial direction in order to have the position sensor as close to the vertical center line of the stator portion of the magnetic bearing as possible. The vertical center line of the support structure of the magnetic bearing is either situated between the vertical center line of the radial position sensor and the vertical center line of the stator portion of the magnetic bearing, or outwardly from these components in the axial direction.

Most of the radial magnetic bearings of large electric motors are supported by various bearing shield constructions.

With increased speed and/or size of the motor, the relative flexibility of the system increases. Flexible systems are more challenging from the control point of view compared to rigid rotor-support systems for two reasons.

The first reason is that flexible systems have a much wider mechanical bandwidth requiring much better design of the feedback controller at high frequencies.

The second reason is that the non-concentric sensor and actuator together with unavoidable flexible modes results in a node between the sensor and the actuator and makes the situation problematic.

Regarding relatively small electric machines it might be enough to consider only the flexibility of the rotor. However, in large electric machines, the flexibility of the support structure will be even more important and challenging from the control point of view.

The above mentioned challenges have led, e.g., to a design requirement for the bearing shield constructions. The natural frequency of the S-mode of the bearing shield construction should be at least 600 or 800 Hz for a large sub-critical high speed motor (6 MW and 12000 rpm). This requirement means that the shield and the frame end structure must be very stiff.

There are two vibration modes i.e. the umbrella-mode and the S-mode present in a bearing shield construction. The natural frequency of the umbrella-mode is usually much lower than the natural frequency of the S-mode. The umbrella-mode does also not couple to the control loop of the radial actuators of the active magnetic bearing. The S-mode, on the contrary, with a non-concentric position sensor and actuator arrangement couples strongly to the control loop of the radial actuators of the active magnetic bearing, and may have even a modal node between the position sensor and the actuator pair. In general, only the anti-symmetric modes are critical from the control point of view. The S-mode is therefore the more important one to be taken into account when designing a support construction for a radial magnetic bearing.

The modal node (or line) locations of the vibrations are important from the control point of view. This is related to the non-concentric arrangement of the position sensor and the actuator. Each mode of the rotor has modal nodes and the location of these nodes is a function of the rotational speed of the rotor. The modes and modal lines of the bearing shield construction and other parts of the stator of the electric machine are independent of the speed of the rotor of the electric machine or other operational parameters. The frequency range of modes which must be taken into account in feedback control design depends on the control approach. However, this frequency range is roughly 4 times the rotational frequency.

The definition of the support center line is as follows: a lateral load exerted on the radial bearing in the center line produces purely translational deformation of the bearing without rotation of the radial bearing. When the location of the load is moved in the axial direction, the deformation of the radial bearing housing includes also rotation. The center line of a radial bearing is an important design parameter of all rotating machines. The design parameter is advantageously the nodal point of the S-mode. The nodal point of the S-mode is the coinciding point of the nodal lines of the vertical and horizontal S-mode. In most bearing-shield-frame structures the nodal point of the S-mode is axially close to the center line of the bearing support construction.

The most common radial position sensor type used together with magnetic bearings is based on an inductive sensor. Usually, the stator portion of the inductive sensor is arranged in a ring form measuring in two perpendicular directions and applying averaging for signals coming from opposite sides of the rotor.

### BRIEF DESCRIPTION OF THE INVENTION

An object of the present invention is to achieve an improved arrangement and method in connection with an active magnetic bearing for determining the deviation of the shaft of the rotor in an electric machine.

The arrangement according to the invention is characterized by what is stated in the characterizing portion of claim 1.

The method according to the invention is characterized by what is stated in the characterizing portion of claim 7.

The arrangement comprises at least one radial magnetic supporting a rotating shaft on a stationary support structure, and a control unit for controlling the radial magnetic bearing.

The at least one radial magnetic bearing comprises a rotor portion attached to the shaft and a stator portion attached to the support structure, said stator portion comprising electromagnets arranged in diagonally opposing pairs around the shaft, said stator portion having a first axial end and a second axial end at a distance from each other along an axial direction of the shaft, said stator portion further having an axial centre line passing in the radial plane through the middle of the stator portion.

The arrangement is characterized in that the arrangement further comprises:
two radial position sensors positioned at an axial distance from each other in connection with the stator portion,
a pre-processing unit in connection with the control unit,
whereby a deformation line of the centre axis of the loaded shaft and a deformation line of the centre axis of the stator portion of the loaded radial magnetic bearing is determined in the pre-processing unit based on the deviations measured by the radial position sensors in order to determine an estimated deviation of the shaft at a position situated either between the radial position sensors or beyond either of the radial position sensors in the axial direction and using the estimate of the deviation of the shaft at said position in the control unit for controlling the stator portion.

The method for controlling an active magnetic bearing comprising at least one radial magnetic bearing for supporting a rotating shaft on a stationary support structure, and a control unit for controlling the radial magnetic bearing.

The at least one radial magnetic bearing comprising a rotor portion attached to the shaft and a stator portion attached to the support structure, said stator portion comprising electromagnets arranged in diagonally opposing pairs around the shaft, said stator portion having a first axial end and a second axial end at a distance from each other along an axial direction of the shaft, said stator portion further having an axial centre line passing in the radial plane through the middle of the stator portion.

The method is characterized by the steps of:
measuring the displacement of the shaft with two radial position sensors positioned in connection with the stator portion at an axial distance from each other,
determining a deformation line of the centre axis of the loaded shaft and a deformation line of the centre axis of the stator portion of the loaded radial magnetic bearing in a pre-processing unit located in connection with the control unit based on the displacements measured by the radial position sensors,
determining the deviation of the shaft at a virtual displacement measurement position situated either between the radial position sensors or beyond either of the radial position sensors in the axial direction in the pre-processing unit, and
using said deviation of the shaft at the virtual displacement measurement position in the control unit for controlling the actuator.

The use of two radial position sensors for measuring the displacement of the shaft of the rotor makes it possible to calculate the displacement of the shaft in a desired position between the radial position sensors or even in a position beyond the radial position sensors. This can be done by interpolating or extrapolating the displacements measured by the two radial position sensors.

### BRIEF DESCRIPTION OF THE DRAWINGS

In the following the invention will be described in greater detail by means of preferred embodiments with reference to the attached drawings, in which
Figure 1 shows a longitudinal cross section of an electric machine with active magnetic bearings,
Figure 2 shows the principle construction of an active magnetic bearing,
Figure 3 shows a radial position sensor used in an active magnetic bearing,
Figure 4 shows a prior art active magnetic bearing arrangement,
Figure 5 shows an umbrella mode of a bearing shield,
Figure 6 shows an S-mode of a bearing shield,
Figure 7 shows a prior art active magnetic arrangement applied on a rotor,
Figure 8 shows an embodiment of an active magnetic bearing arrangement according to the invention applied on a rotor,
Figure 9 shows the working principle of the arrangement shown in fig. 4.
Figure 10 shows a first bearing shield for an active magnetic bearing.
Figure 11 shows a second bearing shield for an active magnetic bearing.

### DETAILED DESCRIPTION OF EMBODIMENTS OF THE INVENTION

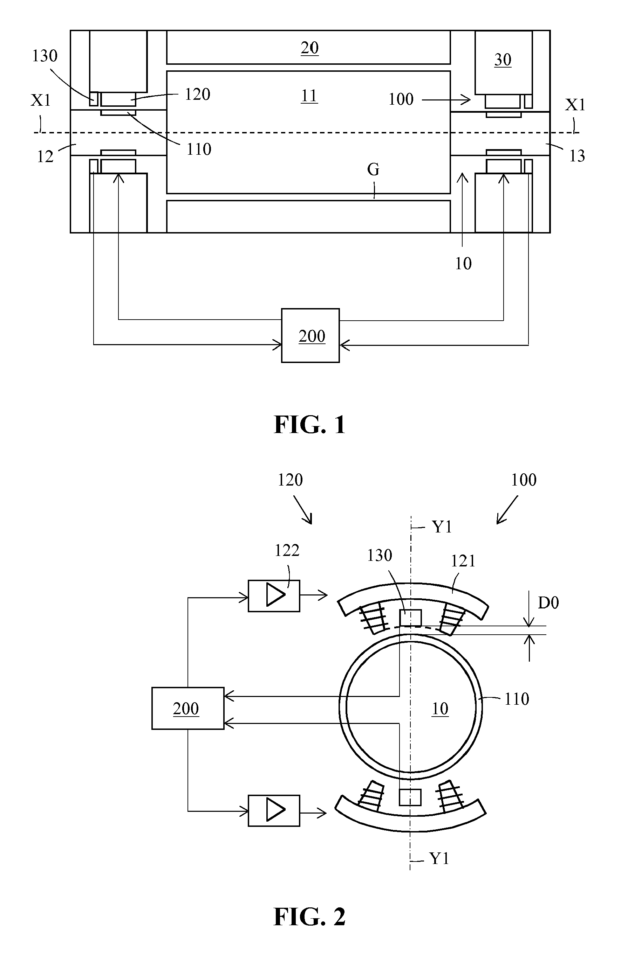

Fig. 1 shows a longitudinal cross section of an electric machine with active magnetic bearings. The electric machine comprises a rotor 10 and a stator 20 surrounding the rotor 10. There is an air gap G between the rotating rotor 10 and the stationary stator 20. The rotor 10 comprises a rotor winding and the stator 20 comprises a stator winding, but these are not shown in the figure. The rotor 10 is rotating around a longitudinal centre axis X-X of rotation. The rotor 10 comprises a central portion 11 and an end portion 12, 13 at each end of the central portion 11. Each end portion 12, 13 of the rotor 10 is rotatably supported at the bearing shield 30 with an active magnetic bearing 100. The active magnetic bearings 100 at both end portions 12, 13 of the rotor 10 are identical. Each active magnetic bearing 100 comprises a cylindrical rotor portion 110 being fitted into the end portion 12, 13 of the rotor 10 and a stator portion 120 being firmly attached to the bearing shield 30 and surrounding the rotor portion 110. The stator portion 120 forms an actuator of the active magnetic bearing 100. There is further a position sensor 130 associated with each active magnetic bearing 100. The position sensor 130 measures the displacement between the rotor portion 110 i.e. the rotor 10 and the stator portion 120 of the active magnetic bearing 100. There is only one position sensor 130 associated with each active magnetic bearing 100 in prior art solutions. A control unit 200 receives the measurement signals from the position sensors 130 at each end of the rotor 10. The control unit 200 controls the stator portions 120 of each active magnetic bearing 100 based on the measurement results from the position sensors 130.

Figure 2 shows the principle construction of an active magnetic bearing. The rotor 10 is provided with the rotor portion 110 of the active magnetic bearing 100. The position of the rotor 10 is in a first direction Y1-Y1 adjusted with a first pair of diagonally positioned electromagnets 121. There is at least a second pair of diagonally positioned electromagnets 121 working in a second direction perpendicular to the first direction Y1-Y1, which is not shown in the figure. Each electromagnet 121 is controlled by a power amplifier 122. There is further a position sensor 130 in connection with each electromagnet 121. The position sensor 130 measures the distance between the position sensor 130 and the outer circumference of the shaft 10. The position sensors 130 are thus positioned at the same radial distance D0 from the shaft 10 as are the electromagnets 121. The position sensors 130 are situated axially at either side of the electromagnets 121. A control circuit 200 receives the output signals of the position sensors 130, calculates an average of the output signals of the two opposite position sensors 130 and controls the power amplifiers 122 based on this average. The position of the rotor 10 in the air gap between the electromagnets 121 is thus controlled by the magnetic force of the electromagnets 121. The magnetic force is controlled by the electric current supplied by the power amplifier 122 to the windings of the electromagnet 121.

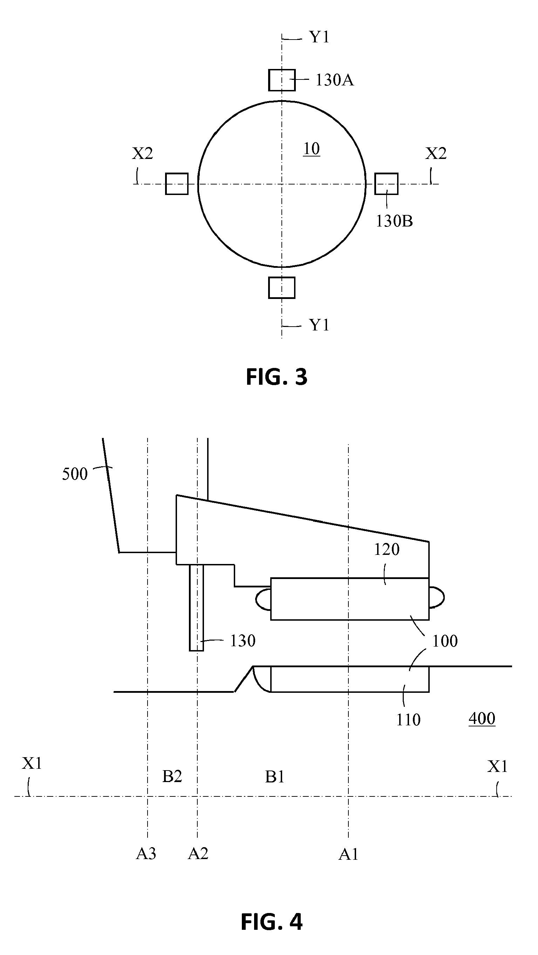

Figure 3 shows a position sensor used in an active magnetic bearing. The position sensor 130 surrounds the rotor 10. The position sensor 130 comprises a first pair 130A of sensors measuring in a first direction Y1-Y1 and a second pair 130B of sensors measuring in a second direction X2-X2. The first direction Y1-Y1 is perpendicular to the second direction X2-X2.

Figure 4 shows a prior art active magnetic bearing arrangement. The figure shows one end of a rotating part 400, the active magnetic bearing 100 and the support structure 500 associated with said end of the rotating part 400. The rotor portion 110 of the active magnetic bearing 100 is attached fixedly to the rotating part 400. The stator portion 120 of the active magnetic bearing 100 is attached fixedly to the support structure 500. The stator portion 120 of the active radial magnetic bearing 100 controls the radial position of the rotating part 400. The arrangement comprises further a position sensor 130. A vertical centre line A1 of the stator portion 120 of the active magnetic bearing 100, a vertical centre line A2 of the position sensor 130 and a vertical centre line A3 of the support structure 500 has also been indicated in the figure. The vertical centre line A2 of the radial position sensor 130 is positioned outwardly at an axial X1-X1 distance B1 from the vertical centre line A1 of the stator portion 120 of the active magnetic bearing 100. The vertical centre line A2 of the position sensor 130 is further positioned inwardly at an axial X1-X1 distance B2 from the vertical centre line A3 of the support structure 500. Said three vertical centre lines A1, A2, A3 are thus positioned at axial X1-X1 distances B1, B2 from each other and do not coincide.

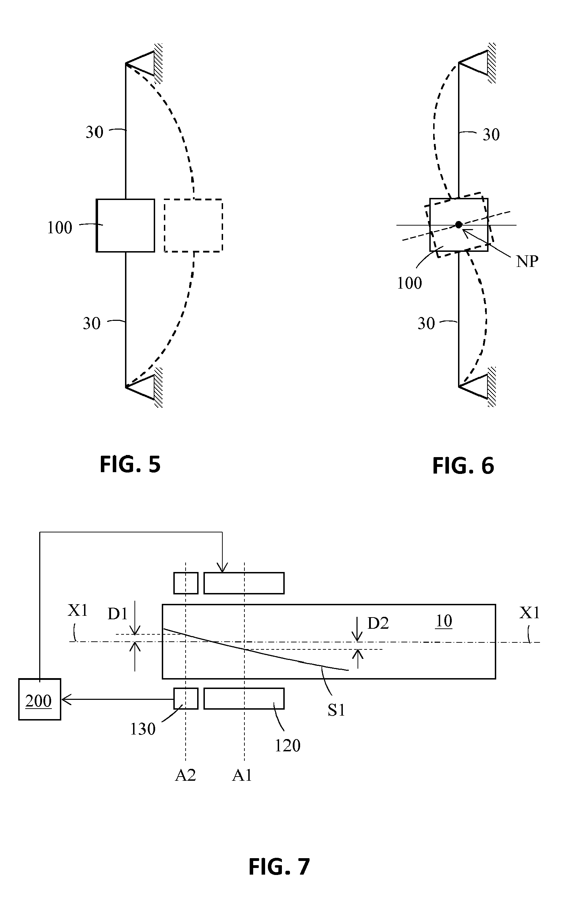

Fig. 5 shows an umbrella mode vibration and fig. 6 shows an S-mode vibration of a bearing shield. These are the two vibration modes that have the smallest vibration frequency in a bearing shield 30. There are actually two S-modes with slightly different natural frequencies, one in a horizontal direction and the other in a vertical direction. Both of these modes have a node line. These two node lines cross in a nodal point NP in a symmetrical system. The figures show that it is the S-mode that is the problematic one. d. The bearing 100 is supported with the bearing shield 30 to the frame of the machine.

Figure 7 shows a prior art active magnetic bearing arrangement applied on a rotor. The figure shows the unloaded or neutral centre line X1-X1 of the rotor 10 and also a part of the loaded S-formed centre line S1 of the rotor 10 in the direction between the two opposite position sensors 130. The figure shows that the position sensor 130 measures that the loaded S-formed centre line S1 is deflected in a first direction by a distance D1 from the neutral centre line X1-X1. This means that the control unit 200 will send a control signal to the power amplifiers 122 in order to correct the position of the rotor 10 accordingly. The situation at the actuator 120 is, however, different as the loaded S-formed centre line S1 is deflected in a second opposite direction to the first direction by a distance D2 form the neutral centre line X1-X1 at the vertical action line A1 of the actuator 120. This will lead to problems and oscillations in the control system of the active magnetic bearing 100.

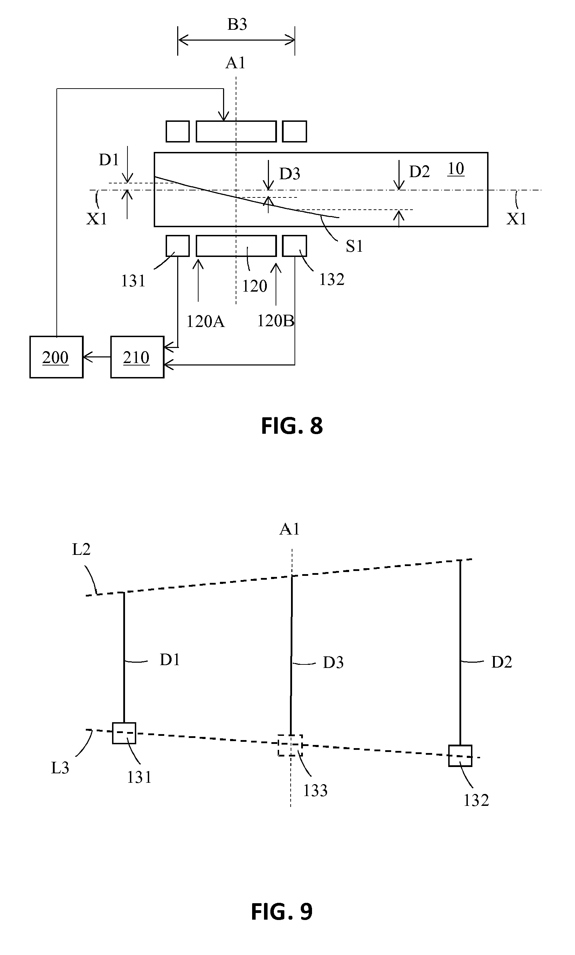

Fig. 8 shows an embodiment of an active magnetic bearing arrangement according to the invention. There are two position sensors 131, 132 situated at a distance B3 from each other at opposite axial X1-X1 ends 120A, 120B of the stator portion 120 of the active magnetic bearing 100. The two position sensors 131, 132 will measure the displacements of the loaded S-formed centre line S1 of the rotor at different axial X1-X1 positions of the rotor 10. The first position sensor 131 measures that the loaded S-formed centre line S1 is deflected a radial displacement D1 upwards and the second position sensor 132 measures that the loaded S-formed centre line S1 is deflected a radial displacement D2 downwards. The displacement D3 of the loaded S-formed centre line S1 at the vertical action line A1 of the stator portion 120 of the active magnetic bearing 100 is estimated by a linear interpolating of two measurement values D1, D2 in a pre-processing unit 210. As the axial X1-X1 position of the position sensors 131, 132 and the axial X1-X1 position of the vertical action line A1 of the stator portion 120 of the active magnetic bearing 100 is known, linear interpolation can be used to determine an estimate of the deflection of the S-mode centre line at the vertical action line A1. There is thus a deflection D3 downwards at the point where the interpolation line intersects with the vertical action line A1 of the stator portion 120 of the magnetic bearing 100.

The position sensor 130 measures the deflection of the rotor 10 in two perpendicular directions. The position of the centre line of the rotor 10 can be calculated based on this. The pre-processing unit 210 which forms the interpolation or extrapolation can be a different unit or it can be integrated into the control unit 200. The figure shows the active magnetic bearing arrangement at one end of the stator 10. There is an identical active magnetic bearing arrangement at the opposite end of the rotor.

The S-mode oscillation of the support structure 30 as shown in figure 6 will naturally also affect the situation. The active magnetic bearing 100 attached to the support structure 30 will oscillate with the support structure 30.

Fig. 9 shows the working principle of the arrangement according to fig. 8. L2 denotes the deformation line of the centre axis of the loaded rotor 10. L3 denotes the deformation line of the centre axis of the stator portion 120 of the loaded active magnetic bearing 100. A1 denotes the vertical centre line of the stator portion 120, which coincides with the action line of the virtual position sensor 133. Two radial position sensors 131, 132 are used in combination with each actuator 120. The position sensors 131, 131 are situated symmetrically on each side of the stator portion 120 in the axial X1-X1 direction. The deflection D1 measured by the first position sensor 131 and the deflection D2 measured by the second position sensor 131 are used to determine the deformation line L2 of the center axis of the loaded shaft 10 and the deformation line L3 of the center axis of the stator portion 120 of the loaded active magnetic bearing 100.

Once the deformation lines L2 and L3 have been determined it is possible to calculate the deviation at any point between the two sensors 131, 131 or beyond either of the two sensors 131, 132 in the axial X1-X1 direction. The idea in the calculation is to position a virtual position sensor 133 at any point between the two sensors 131, 132 or beyond either of the two sensors 131, 132 in the axial X1-X1 direction and to calculate an estimate for the deviation of the rotor 10 at said virtual sensor 133.

The virtual sensor 133 is in figure 9 at the vertical center line A1 of the stator portion 120. This means that an average value AV = (D1+D2)/2 of the first deflection D1 measured by the first radial position sensor 131 and the second deflection D2 measured by the second radial position sensor 132 is calculated in the pre-processing unit 210 and used in the control unit 200 for controlling the actuator 120. This average value of the signals of the two radial position sensor 131, 132 signals gives a good estimate for the displacement of the rotor 10 in the actuator 120 center plane, i.e. in the plane of the vertical center line A1 of the actuator 120. The estimate is based on the assumption that the deflection of the rotor 10 and the stator portion 120 of the active magnetic bearing 100 is linear along the center axis X1-X1 of the rotor 10. This assumption is well founded. The use of a position sensor 131, 132 at each end of the stator portion 120 makes it possible to have the vertical center line A1 of the stator portion 120 coincide with the center line A1 of the virtual displacement sensor 133.

The embodiment shown in figure 8, where the radial position sensors 131, 132 are positioned at each end of the actuator 120, is advantageous. It is, however, also possible to position the radial position sensors 131, 132 at the same side of the stator portion 120 at an axial X1-X1 distance B3 from each other. The displacement measurements of the radial position sensors 131, 132 could then be extrapolated in order to position the virtual sensor 133 at the center line A1 of the stator portion 120. The assumption is then that the deviation of the shaft 10 is linear along the axis X1-X1 of the shaft rotor from the stator portion 120 to the radial position sensors 131, 132.

The bearing 100 can move in a vertical translation, in an axial translation and in a rotational movement. The axial translation is not relevant in connection with a magnetic bearing 100. The most essential is the relative movement of the bearing 100 in the vertical middle plane of the actuator. The magnetic bearing 100 and the position sensors 131, 132 form a rigid body. The virtual sensor 133 gives the position of the shaft in relation to the bearing independently of the movement of the bearing or the shaft. Figure 5 and 6 show this in one plane. The same principle works also in a general case. The axial displacement or rotation of the bearing or the shaft does not influence the operation of the magnetic bearing. The bearing and the shaft has thus four movements that are relevant in view of the operation of the magnetic bearing. The bearing shield and the magnetic bearing only influence the vibration of the rotor through the force of the actuator in the magnetic bearing. The force of the actuator of the magnetic bearing can be considered to act in the middle plane of the magnetic bearing. The actuator does not produce any moment to the rotor.

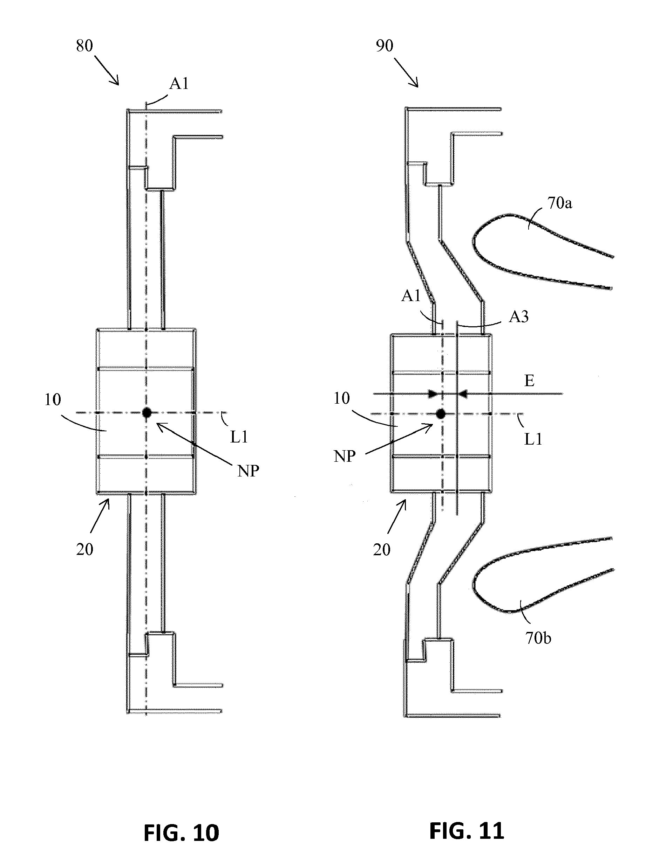

Fig. 10 shows a first bearing support structure i.e. a bearing shield for an active magnetic bearing arrangement. The arrangement of the support structure 80 is such that the nodal point NP of the S-mode vibration of the support structure 80 is located on the common vertical center line A1 of the actuator 120 and the radial position sensors 131, 132. This double coincidence can be arranged by the mechanical design of the bearing support structure 80. The situation is straightforward when a) the bearing shield in the bearing support structure 80 is planar, b) the symmetrical bearing can be mounted symmetrically, and c) the framework supports the shield symmetrically. In this case, the double coincidence point NP is in the symmetry plane i.e. in the intersection between the axis X1-X1 of the rotor 10 and the common vertical center line A1 of the actuator 120 and the sensors 131, 132.

Fig. 11 shows a second bearing support structure for an active magnetic bearing. This arrangement of the support structure 90 is also such that the nodal point NP of the S-mode vibration of the support structure 90 is located on the common vertical center line A1 of the actuator 120 and the radial position sensors 131, 132. This bearing support structure 90 can be used in cases where there is a requirement to shorten the bearing span or the shaft length. This means that the bearing housing must be inserted between the winding overhangs 70a, 70b and the symmetry assumptions cannot be used. In these cases, the support structure (e.g. corrugated or with ribs) can be adjusted and the bearing housing can be shifted axially outwardly a distance E so that the vertical center line A1 of the actuator 120 and the radial position sensors 131, 132 coincides with the node point NP of the S-mode oscillation of the bearing support structure. The double coincidence point NP is also in this case in the intersection between the axis X1-X1 of the rotor 10 and the common center line A1 of the actuator 120 and the radial position sensors 131, 132.

As the nodal point NP of the S-mode vibration of the bearing support structure 80, 90 is close to the center line A3 of the bearing support structure 80, 90, the radial actuator 120 has a stiff support for the force production and the radial position sensors 131, 132 a steady foundation for the displacement measurements. These positive features reach over a large frequency range. The advantageous location of the actuator 120 means that the control forces produce only a weak excitation to the local shield and frame vibrations.

The double coincidence point in a bearing-shield-frame system can be solved by calculation methods like the Finite Element Method (FEM).

The use of two sensors forming a virtual sensor at the vertical center line of the actuator is fairly easy to achieve. The extension of this coincidence point approach to the control of the support dynamics of the bearing is a more advanced approach.

This sensor-support arrangement enables a more robust control for large electric machines with active magnetic bearings. Due to the double coincidence point approach a) the feedback controller design resembles that one consisting a rigid rotor and support, b) the tuning on the test floor and the final site is straightforward, c) the vibration levels of the machine induced by the magnetic bearings are lower, and d) the bearing shield can be made lighter.

The cost of using two sensors for each radial bearing instead of the prior art one sensor solution is relatively small compared to the total system costs. In addition, the advantageous location of the second sensor is inside of the actuator with usually ample of space.

The calculations needed in the invention can easily be done e.g. algorithmically as a part of the control software. The calculations form an additional procedure to prior art calculations in an active magnetic bearing arrangement where the displacement signals from both sides of the rotor are averaged.

One additional advantage of the invention is that the position of the virtual sensor can be determined after the system has been assembled. It might be that the mutual positions of the bearing support and the active magnetic bearing and/or the positions of the sensors do not exactly correspond to the calculated positions after the whole system has been assembled. This possible change in positions can be taken into account by tuning the position of the virtual sensor after the whole system has been assembled.

The figures show only the radial magnetic bearing of the active magnetic bearing. The axial magnetic bearing of the active magnetic bearing is not shown at all in the figures. This is due to the fact that the invention is directed only to the radial magnetic bearing.

The active magnetic bearing arrangement according to the invention can be used in any applications where a rotation part is to be supported by an active magnetic bearing to a stationary support structure.

The power of the electric machine using the active magnetic bearing is over 1 MW and the rotation speed is of over 5 000 rpm.

The figures are not drawn in scale i.e. the figures just show the general principles of the invention. The vibrations and the dimension of the components are exaggerated in the figures.

It will be obvious to a person skilled in the art that, as the technology advances, the inventive concept can be implemented in various ways. The invention and its embodiments are not limited to the examples described above but may vary within the scope of the claims.

## Claims

1. Active magnetic bearing arrangement comprising at least one radial magnetic bearing (100) for supporting a rotating shaft (10, 400) on a stationary support structure (30, 80, 90, 500), and a control unit (200) for controlling the radial magnetic bearing (100),
said at least one radial magnetic bearing (100) comprising a rotor portion (110) attached to the shaft (10) and a stator portion (120) attached to the support structure (30, 80, 90, 500), said stator portion (120) comprising electromagnets (121) arranged in diagonally opposing pairs around the shaft (10), said stator portion (120) having a first axial end (120A) and a second axial end (120B) at a distance from each other along an axial direction (X1-X1) of the shaft (10), said stator portion (120) further having an axial centre line (A1) passing in the radial plane through the middle of the stator portion (120),
**characterized in that** the arrangement further comprises:
two radial position sensors (131, 132) positioned at an axial (X1-X1) distance (B3) form each other in connection with the stator portion (120),
a pre-processing unit (210) in connection with the control unit (200),
whereby a deformation line (L2) of the centre axis of the loaded shaft (10) and a deformation line (L3) of the centre axis of the stator portion (120) of the loaded radial magnetic bearing (100) is determined in the pre-processing unit (210) based on the deviations (D1, D2) measured by the radial position sensors (131, 132) in order to determine an estimated deviation of the shaft (10) at a position situated either between the radial position sensors (131, 132) or beyond either of the radial position sensors (131, 132) in the axial (X1-X1) direction and using the estimate of the deviation of the shaft (10) at said position in the control unit (200) for controlling the stator portion (120).

2. Arrangement according to claim 1, **characterized in that** the radial position sensors (131, 132) are positioned at each axial (X1-X1) end (120A, 120B) of the stator portion (120).

3. Arrangement according to claim 2, **characterized in that** an average of the measurement signals (D1, D2) of the radial position sensors (131, 132) is calculated and used in the control unit (200) for controlling the stator portion (120), said average representing a virtual displacement measurement position in the axial centre line (A1) of the stator portion (120).

4. Arrangement according to claim 2 or 3, **characterized in that** the stationary support structure (80) is arranged so that the nodal point (NP) of the S-mode vibration of the support structure (80) coinciding with the common axial centre line (A1) of the stator portion (120) and the position sensors (131, 132).

5. Arrangement according to any one of claims 1-4, **characterized in that** the active magnetic bearing arrangement is used to support the rotor (10) to the bearing shields (30) in an electric machine.

6. Arrangement according to claim 5, **characterized in that** the power of the electric machine is over 1 MW and the rotation speed is over 5 000 rpm.

7. Method for controlling an active magnetic bearing comprising at least one radial magnetic bearing (100) for supporting a rotating shaft (10, 400) on a stationary support structure (30, 80, 90, 500), and a control unit (200) for controlling the radial magnetic bearing (100),
said at least one radial magnetic bearing (100) comprising a rotor portion (110) attached to the shaft (10) and a stator portion (120) attached to the support structure (30, 500), said stator portion (120) comprising electromagnets (121) arranged in diagonally opposing pairs around the shaft (10), said stator portion (120) having a first axial end (120A) and a second axial end (120B) at a distance from each other along an axial direction (X1-X1) of the shaft (10), said stator portion (120) further having an axial centre line (A1) passing in the radial plane through the middle of the stator portion (120),
**characterized by** the steps of:
measuring the displacement (D1, D2) of the shaft (10) with two radial position sensors (131, 132) positioned in connection with the stator portion (120) at an axial (X1-X1) distance (B3) from each other,
determining a deformation line (L2) of the centre axis of the loaded shaft (10) and a deformation line (L3) of the centre axis of the stator portion (120) of the loaded radial magnetic bearing in a pre-processing unit (210) located in connection with the control unit (200) based on the displacements (D1, D2) measured by the radial position sensors (131, 132),
determining the deviation of the shaft (10) at a virtual displacement measurement position situated either between the radial position sensors (131, 132) or beyond either of the radial position sensors (131, 132) in the axial direction (X1-X1) in the pre-processing unit (210), and
using said deviation of the shaft (10) at the virtual displacement measurement position in the control unit (200) for controlling the actuator (120).

8. Method according to claim 7, **characterized by** positioning the radial position sensors (131, 132) at each end (120A, 120B) of the stator portion (120).

9. Method according to claim 8, **characterized by** the steps of:
calculating an average of the displacements (D1, D2) measured by the radial position sensors (131, 132), and
using said average in the control unit (200) for controlling the stator portion (120), said average representing a virtual displacement measurement position in the axial centre line (A1) of the stator portion (120).
